Europäisches Patentamt

European Patent Office

Office européen des brevets

(19)

(11) Veröffentlichungsnummer: **0 437 419 A2**

(12) # EUROPÄISCHE PATENTANMELDUNG

(21) Anmeldenummer: **91890003.6**

(51) Int. Cl.⁵: **A23L 1/00**

(22) Anmeldetag: **09.01.91**

(30) Priorität: **09.01.90 AT 35/90**

(43) Veröffentlichungstag der Anmeldung:
**17.07.91 Patentblatt 91/29**

(84) Benannte Vertragsstaaten:
**CH DE ES FR GB IT LI NL**

(71) Anmelder: **SM VACUUM SOLICH & MAYER**
**Hütteldorferstrasse 139**
**A-1140 Wien (AT)**

(72) Erfinder: **Solich, Karl**
**Hütteldorfer Strasse 139**
**A-1140 Wien (AT)**

(74) Vertreter: **Haffner, Thomas M., Dr. et al**
**Patentanwaltskanzlei Dipl.-Ing. Adolf**
**Kretschmer Dr. Thomas M. Haffner**
**Schottengasse 3a**
**A-1014 Wien (AT)**

(54) **Verfahren zum Lagern und Frischhalten von Lebensmitteln sowie Vorrichtung zur Durchführung dieses Verfahrens.**

(57)     Bei einem Verfahren zum Lagern und Frischhalten von Lebensmitteln wie z.B. Fleisch, Fisch, Gemüse od.dgl., bei welchem das zu lagernde Gut gekühlt oder während des Kühlens unter vermindertem Druck gehalten wird, erfolgt die Kühlung durch Ansaugen von gekühlter Luft (Fig.).

EP 0 437 419 A2

# VERFAHREN ZUM LAGERN UND FRISCHHALTEN VON LEBENSMITTELN SOWIE VORRICHTUNG ZUR DURCHFÜHRUNG DIESES VERFAHRENS

Die Erfindung bezieht sich auf ein Verfahren zum Lagern und Frischhalten von Lebensmitteln wie z.B. Fleisch, Fisch, Gemüse od.dgl., bei welchem das zu lagernde Gut gekühlt und während des Kühlens unter vermindertem Druck gehalten wird sowie auf eine Vorrichtung zur Durchführung eines derartigen Verfahrens.

Für die Kühlung oder Trocknung von Nahrungsmitteln ist es aus der DE-OS 2 301 807 bekannt geworden, eine Reihe von Verfahrensparametern, insbesondere den Unterdruck, die Temperatur und den Feuchtigkeitsgehalt im Lagerraum zu kontrollieren und einzustellen. Im besonderen dient das aus der DE-OS 2 301 807 bekannt gewordene Verfahren hiebei der geregelten Abkühlung von frisch gebackenem Brot.

Lagerbehälter für die Lagerung biologischen Materials, insbesondere von Lebensmitteln, sind in unterschiedlicher Ausbildung bekannt geworden und es ist bekannt, derartige einfache Lagerbehälter, welche mittels eines Deckels verschließbar sind, für die Verlängerung der Lagerzeit zu evakuieren. Gemäß einem älteren, nicht veröffentlichten Vorschlag der österreichischen Anmeldung A 2748/88 ist es bereits bekannt geworden, die Lagerung in einem gekühlten Raum vorzunehmen, welcher mit einer Vakummpumpe verbunden ist, worauf unter gleichzeitiger Kühlung ein Vakuum angelegt werden kann.

Die Erfindung zielt nun darauf ab, ein besonders einfaches und leicht durchführbares Verfahren zu schaffen, mit welchem die Lagerzeiten von Lebensmitteln wesentlich verbessert werden können, wobei gleichzeitig eine konstruktiv besonders einfache und kostengünstige Vorrichtung geschaffen werden soll. Das erfindungsgemäße Verfahren wird hiebei so durchgeführt, daß die Kühlung durch Ansaugen vorgekühlter Luft erfolgt. Durch das Ansaugen von gekühlter Luft können aufwendige und konstruktiv an den Behälter anzupassende Spezialeinrichtungen zum Kühlen des Lagerbehälters entfallen, wobei gleichzeitig der Vorteil erreicht wird, daß eine vorgekühlte Luft in einem Mindestausmaß entfeuchtet ist. Die gekühlte Luft stellt somit eine relativ trockene Luft dar und die Kühlung kann durch Verwendung des für das Evakuieren erforderlichen Aggregates bewirkt werden, wobei über dieses zum Evakuieren zum Einsatz gelangende Aggregat die vorgekühlte Luft einfach abgesaugt werden kann. Der apparative Aufwand bei einem derartigen Verfahren reduziert sich somit auf die Bereitstellung eines beliebigen Kühlaggregates für gekühlte Luft und einer Vakumpumpe, welche über gesonderte Anschlüsse an einem derartigen Lagerbehälter angeschlossen werden können. Die Verwendung gekühlter Luft erlaubt hiebei gleichzeitig eine Lenkung bzw. Führung des Luftstromes im Inneren des Lagerbehälters, welche gleichmäßige Bedingungen und aufgrund der durchgesaugten gekühlten Luft eine Gleichverteilung der Feuchtigkeit im Inneren des Lagerraumes bewirkt. Bei Verwendung von speziell an Lagerbehälter angepaßten Kühlaggregaten besteht nämlich das Problem, daß bei einem Evakuieren regional große Unterschiede in der verbleibenden Feuchtigkeit im Inneren des Lagerbehälters verbleiben, so daß selbst bei Überwachung der Luftfeuchtigkeit der jeweils abgesaugten Luft oder der Anordnung von Feuchtsensoren im Inneren eines derartigen Lagerbehälters mit Rücksicht auf die regional bestehenden Feuchtigkeitsunterschiede optimale Lagerbedingungen nicht ohne weiteres eingehalten werden können. Demgegenüber wird durch das Durchsaugen von gekühlter Luft die Kühlwirkung bei gleichzeitiger Homogenisierung der Bedingungen der Luft im Lagerraum, insbesondere der relativen Feuchtigkeit erzielt. Mit Vorteil kann zur Durchführen des erfindungsgemäßen Verfahrens die angesaugte Luft auf Temperaturen von 2 bis 10°C, gekühlt werden, was in besonders einfacher Weise die Verwendung von konventionellen Kühlschränken als Kühlaggregat für die Bereitstellung der gekühlten Luft erlaubt. Für die Lagerung von Fleisch, Fisch und Geflügel haben sich Temperaturen zwischen +2°C und +4°C und für Obst und Gemüse Temperaturen zwischen +5°C und +10°C als besonders vorteilhaft erwiesen. Wenn Fleisch gepökelt werden soll, hat es sich als vorteilhaft erwiesen, in dem Vakuumbehälter Temperaturwechsel zwischen +5°C und +20°C vorzunehmen, wobei die Zeit innerhalb welcher das zu pökelnde Fleisch auf +20°C gelagert wird etwa ein Zehntel der Zeit betragt, innerhalb welcher das zu pökelnde Fleisch auf +5°C gehalten wird. Durch einen derartigen Temperaturwechsel unter gleichzeitiger Aufrechterhaltung des Vakuums wird eine deutlich verkürzte Reifungszeit von zu pökelndem Fleisch erzielt, wobei die jeweils gewünschten Bedingungen in einfacher Weise kontrolliert werden können.

Die erfindungsgemäße Vorrichtung zur Durchführung des Verfahrens mit einem evakuierbaren und eine verschließbare Öffnung aufweisenden Lagerbehälter ist hiebei im wesentlichen dadurch gekennzeichnet, daß der Behälter über einen ersten Anschluß mit einem Kühlaggregat für gekühlte Luft verbunden ist und daß über einen weiteren Anschluß eine Vakuumpumpe angeschlossen ist, wobei in wenigstens eine der beiden Verbindungsleitungen ein Absperrventil oder ein absperrbares Drosselventil eingeschaltet ist. Eine derartige konstruktiv einfache Ausbildung läßt sich auch nachträglich durch einfache Adaptierungsarbeiten in bestehende Behälterkonstruktionen einbauen, wobei die Maßnahme wenigstens eine der Verbindungsleitungen mit einem Absperrventil oder einem absperrbaren Drosselventil auszustatten, eine konstruktiv einfache Regelung der Lagerbedingungen und die Aufrechterhaltung der gewünschten Temperatur sowie des gewünschten Druckes ermöglicht. Die gesamten Anschlüsse an einem derartigen Behälter können hiebei nach strömungstechnischen Gesichtspunkten so ausgelegt werden, daß eine gleichmäßige Durchströmung des in vorteilhafter Weise isolierten Lagerraumes bzw. Lagerbehälters erzielt wird, wobei im Inneren naturgemäß erforderlichenfalls einfachen Leiteinrichtungen für die Luftströmung angeordnet werden können. Prinzipiell genügt es bei Verwendung von einfachen Vakuumpumpen mit vorbestimmter maximaler Leistung ein Absperrventil oder ein absperrbares Drosselventil in der zum Kühlaggregat für gekühlte Luft führenden Leitung vorzusehen. Voraussetzung dafür, daß das Vakuum nach Abschalten der Vakuumpumpe nicht zusammenbricht, ist hiebei allderdings, daß die Vakuumpumpe wenigstens ein Rückschlagventil aufweist, wie dies bei Vakuumpumpen einfacher Bauart üblich ist. Wenn die Rückschlagsicherheit über die Vakuumpumpe nicht gewährleistet ist, müßte auch in diese zweite Verbindungsleitung ein Absperrventil oder ein absperrbares Drosselventil eingeschaltet werden.

Als Kühlaggregat kann in besonders einfacher Weise ein abschließbarer gekühlter Luftspeicher Verwendung finden, über welchen eine gleitende Anpassung der Druckbedingungen ohne schlagartige Entlastungen des Druckes möglich wird. Ein derartiger abschließbarer Luftspeicher kann somit unmittelbar mit einem evakuierten Behälter bis zur Erzielung eines Druckausgleiches zwischen Luftspeicher und dem Lagerbehälter in Verbindung gesetzt werden, ohne daß es hiebei zu schlagartiger Überbeanspruchung von Lagerbehälter oder Luftspeicher kommt, wodurch konstruktiv besonders einfache und leichte Bauteile für den Lagerbehälter Verwendung finden können. Insbesondere kann die Druckbelastbarkeit des Lagerbehälters limitiert werden, so daß insgesamt eine leichtere Konstruktion der Lagerbehälter gewählt werden kann. Die Verbindungsleitung zum Kühlaggregat kann gewünschtenfalls auch als Druckentlastungsöffnung Verwendung finden, wenn der Behälter nach Anlegen eines vorbestimmten Vakuums zur Entnahme von Lagergut geöffnet werden soll. In besonders einfacher Weise wird jedoch für eine derartige Öffnung nicht kalte Luft eingesaugt sondern eine zusätzliche absperrbare Druckentlastungsöffnung vorgesehen, welche mit einem Verschlußglied der verschließbaren Öffnung gekoppelt ist. Auf diese Weise werden Fehlbedienungen und Überbeanspruchungen von konstruktiv leicht gebauten Lagerbehältern vermieden.

Die erfindungsgemäße Verfahrensführung, bei welcher gekühlte Luft durch den Lagerraum hindurchgesaugt wird, erlaubt es in besonders einfacher Weise die Lagerfähigkeit des zu lagernden Gutes noch dadurch zu erhöhen, daß das Vakuum intermittierend angelegt wird. Zum einen ist es zur Aufrechterhaltung der Kühlung erforderlich, in regelmäßigen Abständen neuerlich gekühlte Luft durch den Behälter hindurchzusaugen und zum anderen führt gerade dieses in regelmäßigen Abständen vorgenommene Austauschen der Atmosphäre im Inneren des vorzugsweise isolierten Lagerbehälters dazu, daß regionale Disproportionen in der Feuchtigkeitsverteilung mit Sicherheit vermieden werden. Mit Vorteil ist daher erfindungsgemäß die Anordnung bzw. Ausbildung so getroffen, daß die Vakuumpumpe und das Absperrventil bzw. absperrbare Drosselventil in der Leitung vom Kühlaggregat mit einer Steuerung verbunden sind, wobei die Vakummpumpe zum Nachlauf bis zum Erreichen eines vorbestimmten Unterdruckes nach dem Schließen der Leitung vom Kühlaggregat gesteuert ist. Ein derartiger Nachlauf erlaubt es, den gewünschten Unterdruck auch dann aufrechtzuerhalten, wenn als abschließbarer gekühlter Luftspeicher eine relativ einfache Kühlschrankkonstruktion zum Einsatz gelangt. An die Dichtheit des abschließbaren Luftspeichers für die gekühlte Luft sind hier keine besonderen Anforderungen gestellt. Im übrigen muß nach dem Absaugen von gekühlter Luft in diesem Luftspeicher ja wieder für den Zutritt von frischer Luft zum Zwecke der Kühlung Sorge getragen sein. Die einfache Steuerungseinrichtung kann in der Folge, wie bereits oben erwähnt, in vorteilhafter Weise so geschaltet sein, daß die Steuereinrichtung ein Schaltwerk zum zyklischen Betätigen des Absperrventiles und der Vakuumpumpe enthält und mit wenigstens einem Temperaturfühler sowie gegebenenfalls einem Druckfühler verbunden ist. Auf diese Weise lassen sich intermittierende Druckaufbau- und Druckentlastungsphasen erzielen, wobei in den Druckentlastungsphasen gleichzeitig die gewünschte Kühlung bei Durchströmung des Lagerraumes mit frischer gekühlter und relativ trockener Luft erfolgt.

An Stelle eines beispielsweise elektrisch oder mit Gas betriebenen Kühlschrankes als abschließbarer Luftspeicher kann auch ein mit Trockeneis gekühlter Luftspeicher zum Einsatz gelangen. Hiebei wird entweder gekühlte Luft oder unmittelbar kaltes $CO_2$ aus der Trockeneisbox in den Lagerbehälter zur Kühlung eingeleitet. Nach Erreichen eines bestimmten Unterdruckes kann der Druckausgleich in der Trockeneisbox durch Aufdrücken von $CO_2$ aus einer Gasflasche hergestellt werden, wobei sich bei adiabatischer Entspannung von $CO_2$ unter Druck aus einer Druckflasche eine Kühlung des Luft-bzw. $CO_2$-Speichers ergibt. Eine Belüftung der gelagerten Güter mit $CO_2$ kann bei Fleisch, Fisch und Geflügel die Lagerzeit auf Grund der Verringerung des $O_2$-Gehaltes noch weiter

erhöhen. Bei Obst kann mit Hilfe von $CO_2$ die Reifung von nicht ausgereiften Früchten beschleunigt werden, ohne daß jedoch ien rascheres Verderben des Obst beobachtet wird.

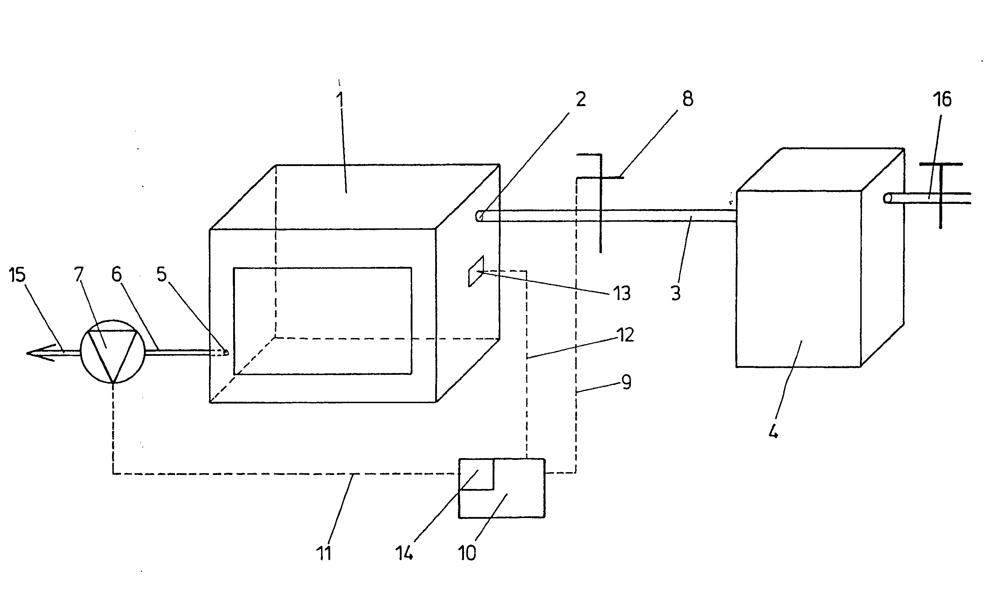

Die Erfindung wird nachfolgend an Hand eines in der Zeichnung schematisch dargestellten Ausführungsbeispieles der erfindungsgemäßen Vorrichtung näher erläutert, in welcher eine erfindungsgemäße Einrichtung zur Lagerung von Lebensmitteln dargestellt ist.

In dieser ist der Lagerbehälter 1 mit einem Anschluß 2 versehen, an welchem eine Leitung 3 zu einem Kühlaggregat 4 angeschlossen ist. Bei einem zweiten Anschluß 5 an dem Lagerbehälter 1 ist eine Vakuumleitung 6 angeschlossen, welche mit einer konventionellen Vakuumpumpe 7 verbunden ist.

In die Leitung 3 zwischen dem Lagerbehälter 1 und dem Kühlaggregat 4 ist ein Absperrventil oder ein absperrbares Drosselventil 8 eingeschaltet, welches über eine Steuerleitung 9 mit einer konventionellen Steuerung 10 verbunden ist. Die Steuereinrichtung 10 ist über eine weitere Leitung 11 mit der Vakuumpumpe 7 verbunden und über eine Leitung 12 mit in dem Lagerbehälter vorgesehenen Temperaturbzw. Druckfühlern verbunden. In der Steuereinrichtung 10 ist ein Schaltwerk 14 vorgesehen, welches eine zyklische Steuerung des Absperrventils 8 und der Vakuumpumpe 7 ermöglicht.

An die Vakuumpumpe 7 ist weiters eine Belüftungsleitung 15 angeschlossen und mit dem Kühlaggregat 4 eine Druckentlastungsöffnung 16 verbunden.

## Patentansprüche

1. Verfahren zum Lagern und Frischhalten von Lebensmitteln wie z.B. Fleisch, Fisch, Gemüse od.dgl., bei welchem das zu lagernde Gut gekühlt und während des Kühlens unter vermindertem Druck gehalten wird, dadurch gekennzeichnet, daß die Kühlung durch Ansaugen von gekühlter Luft erfolgt.

2. Verfahren nach Anspruch 1, dadurch gekennzeichnet, daß die angesaugte Luft auf Temperaturen von 2 bis 10°C, gekühlt wird.

3. Vorrichtung zur Durchführung des Verfahrens nach Anspruch 1 oder 2 mit einem evakuierbaren und eine verschließbare Öffnung aufweisenden Lagerbehälter (1), dadurch gekennzeichnet, daß der Behälter (1) über einen ersten Anschluß (2) mit einem Kühlaggregat (4) für gekühlte Luft verbunden ist und daß über einen weiteren Anschluß (2) eine Vakuumpumpe (7) angeschlossen ist, wobei in wenigstens eine der beiden Verbindungsleitungen (3, 6) ein Absperrventil oder ein absperrbares Drosselventil (8) eingeschaltet ist.

4. Vorrichtung nach Anspruch 3, dadurch gekennzeichnet, daß das Kühlaggregat (4) als abschließbarer gekühltei Luftspeicher ausgebildet ist.

5. Vorrichtung nach Anspruch 3 oder 4, dadurch gekennzeichnet, daß der Lagerbehälter (1) eine absperrbare Druckentlastungsöffnung (16) aufweist, welche mit einem Verschlußglied der verschließbaren Öffnung gekuppelt ist.
6. Vorrichtung nach Anspruch 3, 4 oder 5, dadurch gekennzeichnet, daß die Vakuumpumpe (7) und das Absperrventil bzw. absperrbare Drosselventil in der Leitung vom Kühlaggregat (4) mit einer Steuerung (10) verbunden sind, wobei die Vakuumpumpe (7) zum Nachlauf bis zum Erreichen eines vorbestimmten Unterdruckes nach dem Schließen der Leitung vom Kühlaggregat (4) gesteuert ist.

6. Vorrichtung nach Anspruch 6, dadurch gekennzeichnet, daß die Steuereinrichtung (10) ein Schaltwerk (14) zum zyklischen Betätigen des Absperrventils (8) und der Vakuumpumpe (7) enthält und mit wenigstens einem Temperaturfühler sowie gegebenenfalls einem Druckfühler verbunden ist.

EP 0 437 419 A2